# EUROPEAN PATENT SPECIFICATION

(11) **EP 0 460 301 B1**
(45) Date of publication and mention of the grant of the patent: **01.03.1995**
(21) Application number: 90201456.2
(22) Date of filing: 07.06.1990
(51) Int. Cl.: G06K 13/10, B65H 29/60

(54) **Card input device**
Karteneingabevorrichtung
Dispositif d'entrée de cartes

(43) Date of publication of application: 11.12.1991
(73) Proprietor: BELL TELEPHONE MANUFACTURING COMPANY Naamloze Vennootschap, B-2018 Antwerp (BE)
(72) Inventor: Van Dooren, Paul Jozef Elisabeth, B-2310 Rijkevorsel (BE)

(56) References cited:
- US-A- 3 942 785
- US-A- 4 287 409
- PATENT ABSTRACTS OF JAPAN vol. 13, no. 565 (M-907), 14December 1989; & JP - A - 01236140 (RICOH CO) 21.09.1989

## Description

The present invention relates to a card input device having a card entry path.

Such a card input device is generally known in the art. It has either a straight entry path so that it can only be used with relatively stiff cards, or a curved entry path so that the cards to be used therewith have to be relatively flexible. Devices of this last type are for instance disclosed in the published European patent applications 0085497 and 0318213.

Because their use is limited to either relatively stiff or relatively flexible cards the application domain of the known card input devices is relatively limited.

An object of the present invention is to provide a card input device of the above type but which while remaining simple has an extended domain of use.

According to the invention there is provided a card input device as defined in claim 1. In essence a card operated selection means provides selective access from said entry path to a plurality of second paths.

By the presence of a plurality of second paths the input device may be used for a plurality of types of cards and because the selection means is operated by the card itself the device can remain simple.

Another characteristic feature of the present input device is that said card in function of its characteristics operates said selection means.

Thus the selective access to the second paths is a function of the card characteristics.

Still another characteristic of the present input device is that said characteristics are the stiffness of said card.

In this way the selective access to the second paths is function of the stiffness of the card so that the input device may be used for cards having a different stiffness, e.g. rigid and flexible cards.

The above mentioned and other objects and features of the invention will become more apparent and the invention itself will be best understood by referring to the following description of an embodiment taken in conjunction with the accompanying drawings wherein :
Fig. 1 is a side view of a card input device according to an embodiment of the invention;
Fig. 2 is a view in the direction of arrow II of Fig. 1;
Figs. 3 and 4 are views at an enlarged scale to illustrate the operation of the card input device of Figs. 1 and 2.

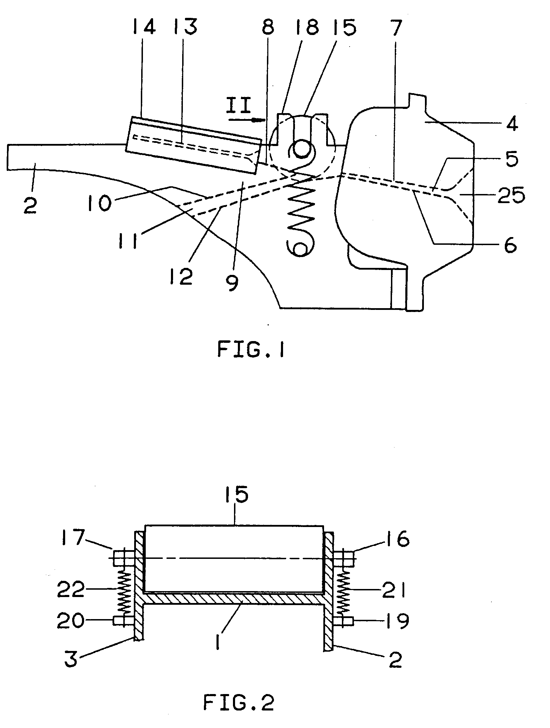

Principally referring to Figs. 1 and 2 the card input device shown therein includes a frame 1 having two side flanges 2 and 3 (Fig. 2) and to which is secured an entry block 4 whose side walls substantially coincide with the frame flanges 2 and 3.

The entry block 4 has an entry mouth 25 which extends transversally between the flanges of the block 4 and provides access to an entry slot or path 5 delimited by a lower wall 6 and an upper wall 7. The lower wall 6 is substantially in line with the upper plane 8 of a wedge-shaped member 9 transversally mounted between the frame flanges 2 and 3. The lower plane 10 of the member 9 delimits a second path 11 with a transverse plate 12 which is secured between the flanges 2 and 3 and makes an obtuse angle with the wall 6 of the entry path 5. The upper plane 8 of the member 9 is in line with the lower plane of a slot or second path 13 in a card reader 14 also transversally mounted between the flanges 2 and 3.

A cylindrical roller 15 is transversally mounted between the frame flanges 2 and 3, its axle ends 16 and 17 being engaged in and guided by respective cut-out portions of these flanges. For instance, axle end 16 is engaged in and vertically guided by cut-out portion 18 of flange 2. The axle ends 16 and 17 are attached to respective studs 19 and 20 on the frame flanges 2 and 3 by means of springs 21 and 22 respectively. Thus the roller 15 is resiliently mounted . In its rest position as shown in Fig. 1 it rests on the bottom wall 12.

The above described card input device operates as follows.

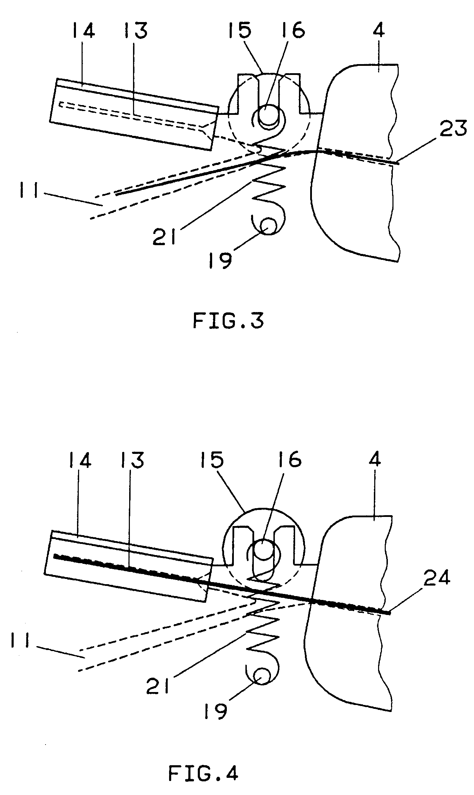

Firstly reference is made to Fig. 3 showing the operation of the input device when a relatively flexible card 23 is introduced therein. When this happens the front end of the card 23 firstly engages with the cyclindrical roller 15 and is then slightly bent to engage between this roller 15 and the bottom wall 12 before entering the second path 11. This effect is obtained because the pressure of the roller 15 has been so adjusted that the roller can only be slightly displaced by the flexible card 23.

Reference is now made to Fig. 4 representing the operation of the input device when a relatively stiff card 24 is introduced therein. When this occurs the front end of the card 24 firstly engages with the cylindrical roller 15 and because of its stiffness and the suitably adjusted pressure of the roller 15 it overcomes this pressure and being not bent it engages in the slot 13 of the reader 14.

While the principles of the invention have been described above in connection with specific apparatus, it is to be clearly understood that this description is made only by way of example and not as a limitation on the scope of the invention.

## Claims

1. Card input device for guiding a card (23, 24), said device having a card entry path (5), characterized in that said device further includes a card operated selection means (15-22) providing selective access from said entry path (5) to a plurality of second paths (11, 13).

2. Card input device according to claim 1, characterized in that said card (23, 24) operates said selection means (15-22) whereby the selective access depends on the characteristics of the card.

3. Card input device according to claim 2, characterized in that said characteristics are the stiffness of said card (23, 24).

4. Card input device according to claim 1, characterized in that said selection means (15-22) includes a displaceable deflector (15), the selective access to a said second path (11, 13) being determined by the distance over which said deflector (15) is displaced by said card.

5. Card input device according to claim 1 or 4 characterized in that said device includes one second path (13) substantially in line with said entry path (5) and another second path (11) at an obtuse angle with said entry path (5).

6. Card input device according to claim 4 or claim 5 when dependent on claim 4, characterized in that said deflector (15) is resiliently mounted.

7. Card input device according to claim 4, characterized in that said deflector is constituted by a cylindrical roller (15) whose upward and downward movement is guided.

8. Card input device according to claim 7, characterized in that said cylindrical roller (15) has axle ends (16, 17) which are guided in cut-out portions (18) of flanges (2, 3) of the frame (1) of said device.

9. Card input device according to claim 6 when dependent on claims 5 and 4, characterized in that said resiliently mounted deflector (15) normally forces an inserted relatively flexible card (23) into said another second path (11) and is displaced by a relatively stiff card (24) so as to allow access to said one second path (13).

## Patentansprüche

1. Karteneingabevorrichtung zum Führen einer Karte (23, 24) mit einem Eingabeweg (5) für die Karte, dadurch gekennzeichnet, daß die Vorrichtung weiterhin von der Karte gesteuerte Auswahlmittel (15-22) enthält, die einen auswählbaren Zugriff vom Eingabeweg (5) auf eine Vielzahl von zweiten Wegen (11, 13) bereitstellen.

2. Karteneingabevorrichtung nach Anspruch 1, dadurch gekennzeichnet, daß die Karte (23, 24) die Auswahlmittel (15-22) betätigt, wobei der auswählbare Zugriff von den Merkmalen der Karte abhängt.

3. Karteneingabevorrichtung nach Anspruch 2, dadurch gekennzeichnet, daß die Merkmale die Steifigkeit der Karte (23, 24) sind.

4. Karteneingabevorrichtung nach Anspruch 1, dadurch gekennzeichnet, daß die Auswahlmittel (15-22) einen verschiebbaren Ablenker (15) enthalten, dessen Verschiebung durch die Karte den auswählbaren Zugriff zu den zweiten Wegen (11, 13) bestimmt.

5. Karteneingabevorrichtung nach Anspruch 1 oder 4, dadurch gekennzeichnet, daß sie einen ersten zweiten Weg (13) enthält, der im wesentlichen in einer Linie mit dem Eingabeweg (5) liegt, und einen weiteren zweiten Weg (11) enthält, der unter einen stumpfen Winkel zum Eingabeweg (5) liegt.

6. Karteneingabevorrichtung nach Anspruch 4 oder 5, dadurch gekennzeichnet, daß der Ablenker (15) elastisch aufgehängt ist.

7. Karteneingabevorrichtung nach Anspruch 4, dadurch gekennzeichnet, daß der Ablenker aus einer zylindrischen Rolle (15) gebildet ist, deren Aufwärts- und Abwärtsbewegung geführt ist.

8. Karteneingabevorrichtung nach Anspruch 7, dadurch gekennzeichnet, daß die Achsenden (16, 17) der Rolle (15) in Ausschnitten (18) von Flanschen (2, 3) eines Rahmens (1) der Karteneingabevorrichtung geführt sind.

9. Karteneingabevorrichtung nach Anspruch 6, dadurch gekennzeichnet, daß der elastisch aufgehängte Ablenker (15) eine eingeführte relativ flexible Karte (23) in den weiteren zweiten Weg (11) drückt und von einer relativ steifen Karte (24) so verschoben wird, daß Zugriff auf den ersten zweiten Weg (13) gegeben ist.

## Revendications

1. Dispositif d'entrée de carte, pour guider une carte (23, 24), ledit dispositif ayant un trajet d'entrée de carte (5), caractérisé en ce que ledit dispositif comprend en outre un moyen de sélection (15-22) actionné par carte fournissant un accès sélectif dudit premier trajet d'entrée (5) à une pluralité de deuxièmes trajets (11, 13).

2. Dispositif d'entrée de carte conforme à la revendication 1, caractérisé en ce que ladite carte (23, 24) actionne ledit moyen de sélection (15-22), de sorte que l'accès sélectif dépende des caractéristiques de la carte.

3. Dispositif d'entrée de carte conforme à la revendication 2, caractérisé en ce que lesdites caractéristiques sont la rigidité de ladite carte (23, 24).

4. Dispositif d'entrée de carte conforme à la revendication 1, caractérisé en ce que ledit moyen de sélection (15-22) inclut un déflecteur pouvant être déplacé (15), l'accès sélectif à l'un desdits deuxièmes trajets (11, 13) étant déterminé par la distance selon laquelle ledit déflecteur (15) est déplacé par ladite carte.

5. Dispositif d'entrée de carte conforme à la revendication 1 ou 4, caractérisé en ce que ledit dispositif comprend un deuxième trajet (13) sensiblement en ligne avec ledit trajet d'entrée (5) et un autre deuxième trajet (11) faisant un angle obtus avec ledit trajet d'entrée (5).

6. Dispositif d'entrée de carte conforme à la revendication 4 ou 5, dans la mesure où elle dépend de la revendication 4, caractérisé en ce que ledit déflecteur (15) est monté de façon élastique.

7. Dispositif d'entrée de carte conforme à la revendication 4, caractérisé en ce que ledit déflecteur est constitué par un rouleau cylindrique dont le mouvement vers le haut et vers le bas est guidé.

8. Dispositif d'entrée de carte conforme à la revendication 7, caractérisé en ce que ledit rouleau cylindrique (15) a des extrémités axiales (16, 17) qui sont guidées dans des parties évidées (18) des flancs (2,3) du cadre dudit dispositif.

9. Dispositif d'entrée de carte conforme à la revendication 6, dans la mesure où elle dépend des revendications 5 et 4, caractérisé en ce que ledit déflecteur (15) monté de façon élastique force normalement une carte insérée relativement flexible (23) dans ledit autre deuxième trajet (11), tandis qu'il est déplacé par une carte relativement rigide (24) de manière à permettre l'accès audit deuxième trajet (13).
